# FASCICULE DE BREVET EUROPEEN

(11) **EP 4 068 128 B1**
(45) Date de publication et mention de la délivrance du brevet: **10.09.2025**
(21) Numéro de dépôt: 22164860.3
(22) Date de dépôt: 28.03.2022
(51) Int. Cl.: G06F 21/57

(54) **DÉMARRAGE SÉCURISÉ D'UNE UNITÉ DE TRAITEMENT**
GESICHERTES STARTEN EINER VERARBEITUNGSEINHEIT
SECURE STARTING OF A PROCESSING UNIT

(30) Priorité: 31.03.2021 FR 2103313
(43) Date de publication de la demande: 05.10.2022
(73) Titulaire: STMicroelectronics (ALPS) SAS, 38000 Grenoble (FR); STMicroelectronics (Grand Ouest) SAS, 72100 Le Mans (FR)
(72) Inventeur: ALBESA, Franck, 72250 PARIGNE L'EVEQUE (FR); ANQUET, Nicolas, 38000 GRENOBLE (FR)
(74) Mandataire: Cabinet Beaumont

(56) Documents cités:
- WO-A1-2019/239121
- US-A1- 2006 090 084
- US-A1- 2014 310 535

## Description

### Domaine technique

La présente description concerne le domaine des procédés et dispositifs pour la sécurité de circuits électroniques, et en particulier un dispositif et un procédé permettant d'effectuer un démarrage sécurisé d'un tel circuit.

### Technique antérieure

Le démarrage d'un dispositif de traitement est basé sur l'exécution de codes tels que des codes logiciels et/ou micrologiciels (en anglais "firmware"). La séquence de démarrage d'un dispositif est une étape sensible en termes de sécurité, car elle implique en général le réglage des paramètres liés à la sécurité du dispositif et/ou le traitement de données sensibles en termes de confidentialité, intégrité et authenticité telles que des clefs de chiffrement.

Bien que des solutions existent pour rendre les codes de démarrage immuables, il serait souhaitable de protéger d'avantage l'accès à ces codes et aux données sensibles lors du démarrage d'un dispositif de traitement.

Le document US 2014/310535 décrit un dispositif électronique avec un composant mémoire FLASH. Le document US 2006/090084 décrit un environnement de traitement sécurisé. Le document WO 2019/239121 décrit un dispositif de protection de clé.

### Résumé de l'invention

Il existe un besoin d'améliorer la sécurisation des procédures de démarrage des dispositifs de traitement.

Un mode de réalisation pallie tout ou partie des inconvénients des dispositifs de traitement connus.

Un mode de réalisation prévoit un procédé de démarrage d'un dispositif de traitement, le procédé comprenant :
- la génération, par un compteur monotone et lors d'une première phase de démarrage, d'une première valeur de comptage ;
- la transmission, par le compteur monotone, de la première valeur de comptage à un circuit de contrôle d'accès d'une mémoire ;
- la lecture, sur la base de la première valeur de comptage, de premières données associées à la première phase de démarrage et stockées dans la mémoire, les premières données comprenant des premiers codes de démarrage ;
- l'exécution des premiers codes de démarrage, les premiers codes de démarrage comprenant une instruction d'incrémentation du compteur monotone vers une deuxième valeur de comptage supérieure à la première valeur de comptage ; et - la génération, par ledit compteur et lors d'une deuxième phase de démarrage, de la deuxième valeur de comptage supérieure à la première valeur de comptage, le circuit de contrôle d'accès de la mémoire étant configuré de sorte que la lecture des premières données ne soit pas autorisée sur la base de la deuxième valeur de comptage.

Selon un mode de réalisation, la mémoire est une mémoire volatile.

Selon un mode de réalisation, la mémoire est une mémoire non-volatile.

Selon un mode de réalisation, le circuit de contrôle d'accès de la mémoire est configuré de sorte que la lecture des premières données ne soit pas autorisée sur la base d'une valeur de comptage supérieure à la première valeur de comptage.

Selon un mode de réalisation, le procédé comprend en outre la lecture, sur la base de la première valeur de comptage, de deuxièmes données stockées dans la mémoire et associées avec la deuxième phase de démarrage.

Selon un mode de réalisation, le procédé comprend en outre :
- la transmission, par le compteur monotone, de la deuxième valeur de comptage à la mémoire ; et
- la lecture de deuxièmes et/ou de troisièmes données stockées dans la mémoire sur la base de la deuxième valeur de comptage.

Selon un mode de réalisation, la première valeur de comptage correspond à une valeur d'initialisation du compteur monotone lors d'un premier démarrage du dispositif de traitement comprenant les première et deuxième phases de démarrage, le procédé comprenant en outre, un deuxième démarrage du dispositif de traitement lors duquel le compteur monotone est initialisé à la deuxième valeur de comptage.

Selon un mode de réalisation, le procédé comprend en outre un autre démarrage du dispositif de traitement, après les premier et deuxième démarrages, lors duquel le compteur monotone est initialisé à nouveau à la première valeur de comptage si une condition sur l'état du dispositif est satisfaite.

Selon un mode de réalisation, la condition sur l'état du dispositif de traitement correspond à l'état de programmation d'un ou plusieurs bits stockés de façon non volatile dans une zone de la mémoire ou d'une autre mémoire.

Selon un mode de réalisation, le procédé comprend en outre, avant la génération de la deuxième valeur de comptage, la lecture, sur la base de la première valeur de comptage, d'une ou plusieurs premières clefs de chiffrement stockées dans la mémoire, le circuit de contrôle d'accès de la mémoire étant configuré de sorte que la lecture des premières clefs de chiffrement ne soit pas autorisée sur la base d'une valeur de comptage supérieure à la première valeur de comptage.

Selon un mode de réalisation, le procédé comprend en outre, après la génération de la deuxième valeur de comptage, la lecture sur la base de la deuxième valeur de comptage d'une ou plusieurs deuxièmes clefs de chiffrement stockées dans la mémoire.

Un mode de réalisation prévoit un dispositif de traitement de données comprenant :
- un compteur monotone configuré pour générer une première valeur de comptage ; et
- une mémoire comprenant un circuit de contrôle d'accès et contenant des premières données associées à une première phase, le circuit de contrôle d'accès étant configuré pour :
- autoriser la lecture, sur la base de la première valeur de comptage, des premières données, les premières données comprenant des premiers codes de démarrage ;
- autoriser l'exécution, sur la base de la première valeur de comptage, des premiers codes de démarrage, les premiers codes de démarrage comprenant une instruction d'incrémentation du compteur monotone vers une deuxième valeur de comptage supérieure à la première valeur de comptage ; et
- ne pas autoriser la lecture des premières données sur la base de la deuxième valeur de comptage.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un dispositif de traitement selon un mode de réalisation de la présente description ;
la figure 2 représente des données et codes accessibles lors d'un démarrage sécurisé selon un mode de réalisation de la présente description ;
la figure 3 est un organigramme représentant des opérations d'un procédé de démarrage sécurisé d'un dispositif de traitement selon un exemple de réalisation de la présente description ; et
la figure 4 est un organigramme représentant des opérations d'un procédé de démarrage sécurisé d'un dispositif de traitement selon un autre exemple de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la conception de dispositifs de traitement est bien connue de la personne du métier et certains éléments n'ont pas été détaillés dans la description qui suit.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

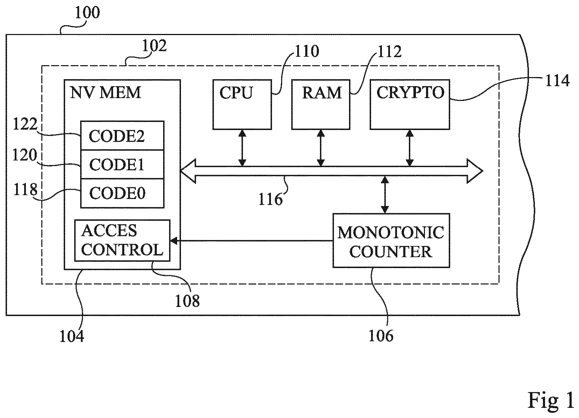

La figure 1 représente, de façon très schématique et sous forme de blocs, un dispositif électronique 100 comprenant un dispositif de traitement 102 selon un mode de réalisation de la présente description.

Le dispositif électronique 100 est par exemple une carte électronique telle qu'une carte à microcircuits, un matériel à usage informatique, un circuit à microprocesseur, etc.

Le dispositif de traitement 102 comprend par exemple une mémoire non volatile 104 (NV MEM), par exemple une mémoire flash. La mémoire 104 comprend une interface de contrôle d'accès 108 (ACCES CONTROL) reliée à un compteur monotone 106 (MONOTONIC COUNTER) .

Les compteurs monotones sont connus dans l'état de la technique, un exemple d'un tel compteur étant décrit dans la publication "Virtual Monotonic Counters and Count-Limited Objects using a TPM without a Trusted OS" de L.F.G. Sarmenta, M. Van Dijk, C.W. O'Donnell, J. Rhodes et S. Devadas, et en particulier dans la partie 3 de ce document. Ce document décrit des réalisations de compteur mis en œuvre sous forme matérielle et/ou en logicielle. Le compteur monotone 106 est par exemple mis en oeuvre de façon matérielle par un circuit numérique, tel qu'un circuit intégré personnalisé (ASIC, de l'anglais "Application Specific Integrated Circuit"). Le compteur monotone est configuré pour maintenir une valeur de comptage, accessible sur une sortie du compteur. Suite à une commande d'incrémentation, le compteur monotone augmente d'une ou plusieurs unités sa valeur de comptage mais, suite à chaque incrémentation, l'opération n'est pas réversible. En effet, le compteur monotone est configuré pour que sa valeur de comptage ne décroisse jamais. De plus, entre deux incrémentations, la valeur de comptage est par exemple protégée contre toutes modifications, pour qu'elle ne puisse pas être effacée ni changée. Seule la commande d'incrémentation permet le remplacement de la valeur actuelle par une nouvelle valeur supérieure à la valeur actuelle.

Le compteur monotone 106 est configuré de sorte qu'aucune commande, mise à part une remise à zéro du dispositif de traitement, ne permette de revenir à la valeur précédente une fois la commande d'incrémentation exécutée. Dans le cas où la valeur de comptage est stockée de manière volatile, chaque mise hors alimentation du dispositif de traitement engendre la perte de la valeur de comptage et à chaque remise sous tension du dispositif, le compteur monotone génère à nouveau une valeur de comptage initiale. Dans le cas où la valeur de comptage est stockée dans un élément de mémorisation non volatile, à chaque redémarrage, une valeur de comptage initiale est par exemple réécrite dans l'élément de mémorisation non volatile du compteur monotone.

Le dispositif de traitement 102 comprend en outre un processeur générique 110 (CPU). Par exemple, le processeur générique 110 est couplé par l'intermédiaire d'un bus 116 au compteur monotone 106 ainsi qu'à une mémoire RAM (mémoire à accès aléatoire) 112 et à la mémoire non volatile 104. La mémoire 112 et/ou la mémoire 104 mémorisent par exemple des instructions pour contrôler le processeur 110. Le processeur générique 110 est en outre couplé par l'intermédiaire du bus 116 à un processeur cryptographique 114 (CRYPTO). Le processeur cryptographique 114 reçoit, par l'intermédiaire du bus 116, des données chiffrées et retourne les données déchiffrées et/ou reçoit, par l'intermédiaire du bus 116, des données non chiffrées et retourne les données chiffrées.

La mémoire non volatile stocke par exemples plusieurs codes de démarrage, et/ou d'autres données, qui sont associés à plusieurs niveaux d'isolement TIL (de l'anglais "temporal isolation level"). Les codes de démarrage sont par exemple des codes logiciels et/ou micrologiciel. Dans l'exemple de la figure 1, la mémoire non volatile 104 comprend une première zone 118 dans laquelle sont stockés un premier code de démarrage et/ou des premières données (CODE0). La mémoire 104 comprend en outre une deuxième zone 120, dans laquelle sont stockés un deuxième code de démarrage et/ou des deuxièmes données (CODE1), ainsi qu'une troisième zone 122 dans laquelle sont stockés un troisième code de démarrage et/ou des troisièmes données (CODE2). Les premier, deuxième et troisième codes de démarrage et/ou données sont par exemple associés à trois niveaux d'isolement TIL correspondants. Bien que le cas de trois ensembles de données soit illustré dans la figure 1, dans d'autres modes de réalisation, la mémoire non volatile 104 peut ne stocker que deux ensembles de données, ou plus de trois ensembles de données, dans des zones correspondantes. A titre d'exemple, les premières, deuxièmes et troisièmes données comprennent des premier, deuxième et troisième codes de démarrage.

Le niveau isolement TIL dépend de la valeur de comptage générée par le compteur monotone 106. Dans un exemple, la valeur TIL est égale à la valeur de comptage du compteur monotone 106, bien qu'il serait possible de modifier la valeur de comptage afin de générer la valeur TIL.

Lors d'un démarrage, la lecture des premier, deuxième et troisième codes et/ou données et/ou l'exécution des premier, deuxième et troisième codes de démarrage, sont effectuées par étapes, chaque étape étant associée à un niveau d'isolement correspondant. Le circuit de contrôle d'accès 108 de la mémoire 104 est configuré de sorte que la lecture de ces codes/données soit contrôlée en fonction du niveau d'isolement de l'étape. Les premières données et/ou le premier code sont par exemple associés au niveau d'isolement, ou valeur de TIL, 0 et le circuit de contrôle d'accès 108 est configuré pour que ces données et/ou code soient uniquement accessibles pour lecture lorsque la valeur de comptage TIL courante est égale à 0. Lorsque la valeur de comptage est incrémentée, par exemple suite à l'exécution du premier code, le circuit de contrôle d'accès 108 verrouille la zone 118, les premières données et/ou le premier code ne sont alors plus accessibles en lecture. Suite à une incrémentation, la valeur de comptage courante passe par exemple à 1 et les données et/ou les codes de démarrage associés au niveau d'isolement 1, par exemple le deuxième code de démarrage, sont exécutés.

Dans certains cas, le circuit de contrôle d'accès 108 est configuré pour permettre la lecture d'une ou plusieurs données associées à des niveaux d'isolement supérieurs à celui de la valeur TIL courante. Plus le niveau d'isolement est bas, plus le niveau de protection est important. Le niveau d'isolement 0 est donc le niveau assurant le plus de protection, car les données correspondantes peuvent être lues uniquement lorsque la valeur de comptage est égale à 0. Ainsi, chaque niveau d'isolement correspond à un niveau de protection du contenu des zones mémoire lui étant associé.

Le mécanisme de contrôle d'accès implémenté par le circuit 108 peut être mis en œuvre de plusieurs manières.

Dans un premier exemple, quand le circuit 108 reçoit une demande de lecture associée à une ou plusieurs adresses dans la mémoire 104, il est configuré pour comparer cette/ces adresse(s) aux plages d'adresses associées aux zones 118, 120, 122 de la mémoire 104. S'il s'agit d'une adresse dans une zone associée à une valeur de TIL inférieure à la valeur courante, le circuit 108 est par exemple configuré pour bloquer l'opération de lecture.

Dans un deuxième exemple, le circuit 108 est configuré pour désactiver un circuit de lecture de toute zone 118, 120, 122 de la mémoire 104 associée à une valeur de TIL inférieure à la valeur courante. Par exemple, une ou plusieurs portes logiques, telles que des portes OU ou des portes ET, sont couplées dans le chemin de sortie de chaque zone 118, 120 et 122 de la mémoire 104 et reçoivent également un signal d'activation générée sur la base de la valeur de TIL permettant de désactiver sélectivement chaque chemin de sortie.

Le fait que la valeur de comptage ne puisse pas être décrémentée lors de la période de fonctionnement du dispositif 100 permet la protection des codes de démarrage une fois leur exécution faite, car le circuit de contrôle d'accès 108 empêche la lecture des données et/ou l'exécution des codes associés à des niveaux d'isolement TIL inférieur au niveau courant.

Dans certains modes de réalisation, une ou plusieurs des données et/ou codes de démarrage et les niveaux d'isolement associés sont réservés à des phases de paramétrisation du dispositif 102 ou à des entités distinctes dans la chaine allant du fabriquant jusqu'à l'utilisateur final. Par exemple, une entité intermédiaire entre le fabriquant du dispositif de traitement et l'utilisateur final du dispositif électronique 100 peut être amenée à installer des données et/ou codes de démarrage qui sont propres à l'utilisation du dispositif 100. Dans ce cas, une ou plusieurs des données et/ou codes de démarrage les plus « bas », par exemple associés au niveau d'isolement 0, sont par exemple réservés au fabricant du dispositif de traitement 102, et d'autres données et/ou codes de démarrage sont réservés à l'entité intermédiaire.

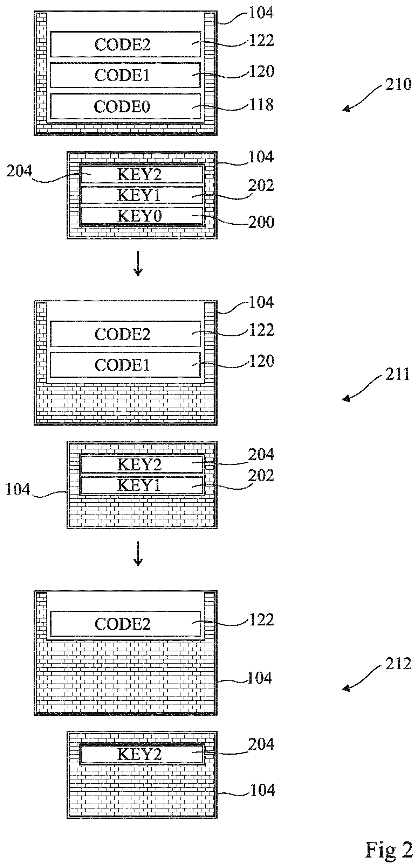

Le contenu des zones mémoire 118, 120 et 122 comprend, dans certains modes de réalisation, d'autres données en plus des codes de démarrage du dispositif de traitement. Par exemple, des autres données sensibles en termes de confidentialité sont stockées en association avec au moins un des premier, deuxième et troisième codes et/ou données. Par exemple, ces autres données comprennent des clefs de chiffrement utilisées lors de l'exécution des codes de démarrage leur étant associés. Dans l'exemple de la figure 2, des zones mémoire 200, 202 et 204 stockent des données sensibles associées respectivement aux codes de démarrage 118, 120 et 122 stockés dans la mémoire non volatile 104. Les zones 200, 202 et 204 sont par exemple des zones distinctes des zones 118, 120 et 122, mais restent associées à un niveau d'isolement correspondant à celui des codes de démarrage auxquels les données sont liées. Ces données sensibles incluent par exemple une ou plusieurs clefs de chiffrement stockées dans chaque zone 200, 202 et 204 et chacune de ces zones est contenue dans la mémoire non volatile 104. Selon un autre mode de réalisation, chaque zone 200, 202 et 204 est une sous-zone de la zone correspondante 118, 120 et 122.

La figure 2 représente des données et codes accessibles lors d'un démarrage sécurisé selon un mode de réalisation de la présente description.

Lors d'une première étape 210 de démarrage du dispositif de traitement illustrée en haut de la figure 2, la valeur de comptage courante est par exemple égale à 0. Dans l'exemple de la figure 2, un niveau d'isolement 0 est associé à un premier code (CODE0) ainsi qu'à des premières données sensibles (KEY0). Le circuit de contrôle d'accès 108 est configuré, par exemple, pour que ce premier code et ces premières données soient exclusivement accessibles lorsque la valeur de comptage courante est égale à 0. Cependant, lors de l'étape 210, le circuit de contrôle d'accès autorise par exemple l'accès à toutes les zones mémoire 200, 202 et 204, ainsi qu'à toutes les zones 118, 120 et 122. En effet, dans certains cas, afin par exemple d'anticiper des étapes suivantes dans le procédé de démarrage, un ou plusieurs des autres codes de démarrage CODE1, CODE2 sont accessibles à la lecture pendant l'étape 210.

Par exemple, une fois que le premier code (CODE0) est exécuté, le processeur générique 110 commande une première incrémentation de la valeur de comptage courante par le compteur monotone 106. Par exemple, le premier code comprend une commande demandant l'incrémentation du compteur. Cette commande est par exemple transmise vers un registre de commande (non illustré) du compteur monotone.

Après cette première incrémentation, la valeur de comptage courante du compteur monotone 106 est par exemple égale à 1, correspondant à la deuxième étape 211 du démarrage. Le circuit de contrôle d'accès 108 reçoit la nouvelle valeur de comptage courante, et est configuré pour empêcher, sur la base de cette valeur de comptage supérieure à 0, tout accès au premier code ainsi qu'aux premières données qui sont associées au niveau d'isolation 0. Autrement dit, les zones mémoires 118 et 200 sont verrouillées sur la base de toute valeur de comptage strictement supérieure à 0.

Le niveau d'isolation 1 est associé à un deuxième code (CODE1) contenu dans la zone 120 ainsi qu'à des deuxièmes données (KEY1) contenues dans la zone 202. Selon un mode de réalisation, le troisième code (CODE2), par exemple associé au niveau d'isolation 2 et contenu dans la zone 122, est accessible pour lecture sur la base de la valeur de comptage courante égale à 1.

Par exemple, une fois que le deuxième code (CODE1) est exécuté, le processeur générique 110 commande une deuxième incrémentation de la valeur de comptage courante par le compteur monotone 106. Par exemple, après cette deuxième incrémentation, la valeur de comptage courante du compteur monotone 106 est égale à 2, correspondant à la troisième étape 212 du démarrage. Le niveau d'isolation 2 est associé au troisième code (CODE2) ainsi qu'à des troisièmes données (KEY2). Le circuit de contrôle d'accès 108 reçoit la nouvelle valeur de comptage, et est configuré pour empêcher, sur la base de cette valeur de comptage supérieure à 1, tout accès au premier et au deuxième codes ainsi qu'aux premières et aux deuxièmes données qui sont associés aux niveaux d'isolation inférieurs ou égaux à 1.

Selon un mode de réalisation, lorsque le dernier code de démarrage est exécuté, par exemple le troisième code de démarrage, le processeur générique 110 commande une troisième incrémentation de la valeur de comptage courante par le compteur monotone. Le circuit de contrôle d'accès 108 verrouille alors tout accès aux premier, deuxième et troisième codes de démarrage ainsi qu'aux premières, deuxièmes et troisièmes données.

Selon un autre mode de réalisation, lorsque le dernier code de démarrage est exécuté, par exemple le troisième code de démarrage, la valeur de comptage courante n'est pas incrémentée par le compteur monotone 106 et l'accès au troisième code de démarrage ainsi qu'aux troisièmes données reste autorisé par le circuit de contrôle d'accès.

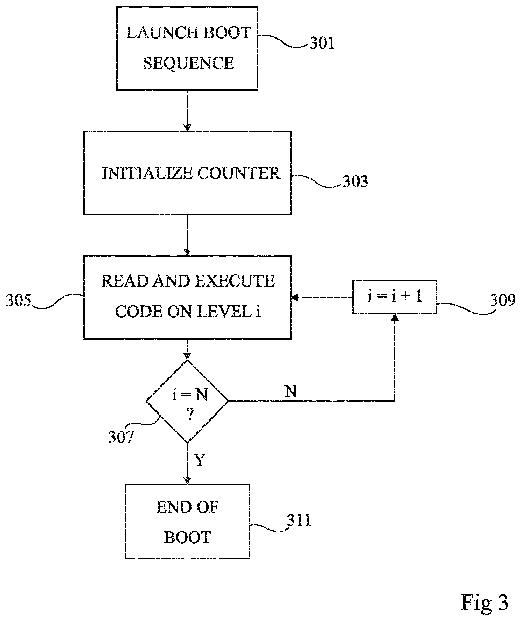

La figure 3 est un organigramme représentant des opérations d'un procédé de démarrage sécurisé d'un dispositif de traitement selon un exemple de réalisation de la présente description. Ce procédé est mis en œuvre par exemple par le processeur générique 110, le compteur monotone 106 et le circuit de contrôle d'accès 108, du dispositif de traitement de la figure 1.

Dans une étape 301 (LAUNCH BOOT SEQUENCE) le dispositif de traitement 102 démarre. Dans un exemple il s'agit du premier démarrage du dispositif 102 après sa production. Dans un autre exemple il s'agit d'un démarrage effectué par une entité intermédiaire entre le fabriquant du dispositif 102 et son utilisateur final. Encore dans un autre exemple, il s'agit d'un démarrage dit de fonctionnement du dispositif électronique 100 effectué par l'utilisateur final.

Dans une étape 303 (INITIALIZE COUNTER), postérieure à l'étape 301, le compteur monotone est initialisé à une valeur initiale, étant un entier naturel. Dans l'exemple dans lequel la valeur de comptage est stockée de manière volatile, chaque mise sous tension du dispositif de traitement engendre l'initialisation de la valeur de comptage, par exemple à 0 ou à 1. Dans un autre exemple dans lequel la valeur de comptage est stockée sur des éléments de mémorisation non volatile, chaque mise sous tension du dispositif de traitement engendre le remplacement de la valeur de comptage courante par la valeur de comptage initiale, par exemple égale à 0 ou à 1.

Dans certains modes de réalisation, la valeur de comptage initiale générée suite à une mise sous tension peut varier selon l'état, ou contexte, du dispositif de traitement 102. Par exemple, une ou plusieurs valeurs de comptage correspondent à un ou plusieurs niveaux d'isolation réservés à une phase de paramétrisation initiale du dispositif 102, comprenant par exemple l'installation de micrologiciels. Les données et/ou codes associés à ces niveaux d'isolement sont par exemple utilisés pour cette paramétrisation initiale.

Par exemple, suite à la fabrication, le dispositif de traitement 102 a le contexte "vierge" et la valeur de comptage initiale est égale à une valeur réservée à la paramétrisation, telle que 0. Une fois la paramétrisation achevée, le contexte du dispositif devient par exemple "paramétrisation achevées". Avec ce nouveau contexte, la mise sous tension du dispositif 102, effectuée par exemple par une entité intermédiaire entre le fabriquant et l'utilisateur final et/ou par l'utilisateur final, déclenchera alors une valeur de comptage supérieure à la valeur de comptage réservée, et par exemple égale à 1. Le ou les codes de démarrage, ainsi que les données sensibles, associés au niveau d'isolement correspondant à la valeur de comptage réservée seront, par conséquent, inaccessibles.

Par exemple, le contexte du dispositif est détecté par la présence d'une tension sur une broche de démarrage du dispositif, cette tension étant appliquée par exemple par l'ajout d'un cavalier (en anglais "jumper") entre la broche de démarrage et une autre broche à une tension d'alimentation. A titre complémentaire ou alternatif, le contexte du dispositif est détecté par la valeur d'un ou plusieurs bits stockés de façon non volatile, et de manière protégée, dans la mémoire 104, ou dans une autre mémoire.

Dans un exemple, le processeur générique 110 est agencé pour détecter le contexte du dispositif 102 lors de la mise sous tension du dispositif 102, et pour configurer en conséquence la valeur de comptage initiale du compteur monotone 106. Dans un autre exemple, le compteur monotone 106 est agencé pour détecter lui-même le contexte du dispositif 102 et pour configurer lui-même sa valeur de comptage initiale, lors de la mise sous tension du dispositif 102.

Dans une étape 305 (READ AND EXECUTE CODE ON LEVEL i), postérieure à l'étape 303, les données et les codes de démarrage associés au niveau d'isolement i sont lus par le processeur générique 110 et les codes de démarrage associés au niveau d'isolement i sont exécutés. Une fois les codes du niveau i exécutés, le processeur générique 110 compare, dans une étape 307 (i=N ?) la valeur de comptage i à la valeur N, N étant la valeur de comptage associée à la dernière étape dans la séquence de démarrage, autrement dit les codes de démarrage du niveau d'isolement N sont les derniers à être exécutés selon le mode de réalisation de la présente description. Par exemple, dans l'exemple de la figure 2, N est égale à 2. Si i n'est pas égal à N (branche N), le procédé continue dans une étape 309 (i=i+1) dans laquelle le processeur générique déclenche l'incrémentation de la valeur de comptage. Par exemple, la valeur de comptage passe de i à i+1. Il est également possible que l'incrémentation augmente la valeur la valeur de comptage de plusieurs unités. Le procédé reprend alors à l'étape 305.

Dans le cas où, suite à l'étape de comparaison 307, la valeur de comptage est égale à N (branche Y), le procédé se termine sur une étape 311 (END OF BOOT) dans laquelle le démarrage du dispositif de traitement se termine. Selon un mode de réalisation, la valeur de comptage courante reste égale à N suite à l'étape 311. Selon un autre mode de réalisation, la valeur de comptage est incrémentée lors de l'étape 311, et la valeur de comptage courante devient égale à N+1. Dans ce deuxième cas, le circuit de contrôle d'accès est alors configuré pour empêcher tout accès à tous les codes de démarrage sur la base de cette valeur de comptage.

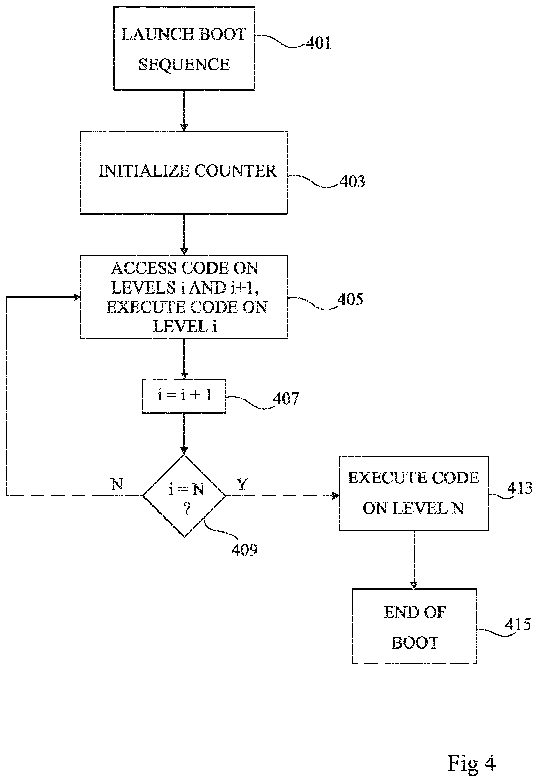

La figure 4 est un organigramme représentant des opérations d'un procédé de démarrage sécurisé d'un dispositif de traitement selon un autre exemple de réalisation de la présente description. Ce procédé est mis en œuvre par exemple par le processeur générique 110, le compteur monotone 106 et le circuit de contrôle d'accès 108, du dispositif de traitement de la figure 1.

Les étapes 401 et 403 sont similaires aux étapes 301 et 303 de la figure 3, et ne vont pas être décrites à nouveau en détail.

Dans une étape 405 (ACCESS CODE ON LEVELS i AND i+1, EXECUTE CODE ON LEVEL i), postérieure à l'étape 403, les données et les codes de démarrage associés aux niveaux d'isolement i+1 sont accessibles par le processeur générique 110 et le ou les codes de démarrage associés au niveau d'isolement i sont exécutés.

Dans un exemple, les données ou codes associés au niveau d'isolement i contiennent une ou plusieurs clefs de chiffrement, chiffrées ou non, qui seront utilisées lors de l'exécution d'un ou plusieurs codes associés au niveau d'isolement i+1. Ainsi, un accès pour écriture est par exemple autorisé sur la ou les zones mémoire associées au niveau d'isolement i+1 afin de provisionner les clefs au codes associés au niveau d'isolement i+1.

Dans un autre exemple, les codes associés au niveau d'isolement i contiennent des instructions visant à vérifier l'intégrité des données et/ou codes associés au niveau d'isolement i+1. Ainsi, un accès en lecture de la ou des zones mémoire associées au niveau d'isolement i+1 est autorisé afin d'effectuer cette vérification.

Dans une étape 407 (i=i+1), postérieure à l'étape 405, la valeur de comptage est incrémentée. Par exemple la valeur de comptage passe de i à i+1. Dans d'autres exemples, l'incrémentation augmente i de plusieurs unités.

Dans une étape 409 (i=N ?) le processeur générique 110 compare la valeur de comptage i à la valeur N, où N est défini comme décrit en relation avec l'étape 307 de la figure 3. Si la valeur i n'est pas égale à N (branche N) le procédé revient à l'étape 405.

Dans le cas où, lors de l'étape de comparaison 409, la valeur de comptage est égale à N (branche Y), le procédé continue sur une étape 413 (EXECUTE CODE ON LEVEL N) dans laquelle le ou les codes de démarrage associés au niveau d'isolation N sont exécutés.

Le démarrage du dispositif de traitement se termine par une étape 415 (END OF BOOT), qui est similaire à l'étape 311 de la figure 3, et n'est pas décrite à nouveau en détail.

Le procédé dont la mise en œuvre est présentée par la figure 4 permet une lecture des codes de démarrage en décalé. En effet les codes de démarrage associés à un niveau d'isolement sont lus lorsque la valeur de comptage est inférieure à la valeur du niveau. Cela permet un gain de temps par rapport à la mise en œuvre du procédé présenté dans la figure 3.

Un avantage des modes de réalisation décrits est que des codes de démarrage, ainsi que de données sensibles en termes de confidentialité, sont protégés de façon importante par l'usage d'un compteur monotone pour verrouiller l'accès à des codes et/ou données.

Un autre avantage des modes de réalisations décrits est qu'il est facilement adaptable à plusieurs architectures de démarrage.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, différents types de processeurs peuvent être utilisés. De plus, le nombre de niveaux d'isolement peut varier.

Enfin, la mise en œuvre pratique des modes de réalisation et variantes décrits est à la portée de la personne du métier à partir des indications fonctionnelles données ci-dessus.

## Revendications

1. Procédé de démarrage d'un dispositif de traitement (102), le procédé comprenant :
- la génération, par un compteur monotone (106) et lors d'une première phase de démarrage, d'une première valeur de comptage ;
- la transmission, par le compteur monotone, de la première valeur de comptage à un circuit de contrôle d'accès (108) d'une mémoire (104) ;
- la lecture, sur la base de la première valeur de comptage, de premières données (118) associées à la première phase de démarrage et stockées dans la mémoire, les premières données comprenant des premiers codes de démarrage ;
- l'exécution des premiers codes de démarrage, les premiers codes de démarrage comprenant une instruction d'incrémentation du compteur monotone vers une deuxième valeur de comptage supérieure à la première valeur de comptage ; et
- la génération, par ledit compteur et lors d'une deuxième phase de démarrage, de la deuxième valeur de comptage, le circuit de contrôle d'accès de la mémoire (108) étant configuré de sorte que la lecture des premières données ne soit pas autorisée sur la base de la deuxième valeur de comptage.

2. Procédé selon la revendication 1, dans lequel la mémoire (104) est une mémoire volatile.

3. Procédé selon la revendication 1, dans lequel la mémoire (104) est une mémoire non-volatile.

4. Procédé selon l'une quelconque des revendications 1 à 3, dans lequel le circuit de contrôle d'accès (108) de la mémoire (104) est configuré de sorte que la lecture des premières données (118) ne soit pas autorisée sur la base d'une valeur de comptage supérieure à la première valeur de comptage.

5. Procédé selon l'une quelconque des revendications 1 à 4, comprenant en outre la lecture, sur la base de la première valeur de comptage, de deuxièmes données (120) stockées dans la mémoire (104) et associées avec la deuxième phase de démarrage.

6. Procédé selon l'une quelconque des revendications 1 à 5, comprenant en outre :
- la transmission, par le compteur monotone (106), de la deuxième valeur de comptage à la mémoire (104) ; et
- la lecture de deuxièmes et/ou de troisièmes données (120, 122) stockées dans la mémoire (104) sur la base de la deuxième valeur de comptage.

7. Procédé selon l'une quelconque des revendications 1 à 6, dans lequel la première valeur de comptage correspond à une valeur d'initialisation du compteur monotone (106) lors d'un premier démarrage du dispositif de traitement (102), comprenant les première et deuxième phases de démarrage, le procédé comprenant en outre, un deuxième démarrage du dispositif de traitement lors duquel le compteur monotone est initialisé à la deuxième valeur de comptage.

8. Procédé selon la revendication 7, comprenant un autre démarrage du dispositif de traitement (102), après les premier et deuxième démarrages, lors duquel le compteur monotone (106) est initialisé à nouveau à la première valeur de comptage si une condition sur l'état du dispositif est satisfaite.

9. Procédé selon la revendication 8, dans lequel la condition sur l'état du dispositif de traitement correspond à l'état de programmation d'un ou plusieurs bits stockés de façon non volatile dans une zone de la mémoire (104) ou d'une autre mémoire.

10. Procédé selon l'une quelconque des revendications 1 à 9, comprenant en outre, avant la génération de la deuxième valeur de comptage, la lecture, sur la base de la première valeur de comptage, d'une ou plusieurs premières clefs de chiffrement (200) stockées dans la mémoire (104), le circuit de contrôle d'accès (108) de la mémoire étant configuré de sorte que la lecture des premières clefs de chiffrement ne soit pas autorisée sur la base d'une valeur de comptage supérieure à la première valeur de comptage.

11. Procédé selon la revendication 10, comprenant en outre, après la génération de la deuxième valeur de comptage, la lecture sur la base de la deuxième valeur de comptage d'une ou plusieurs deuxièmes clefs de chiffrement (202) stockées dans la mémoire.

12. Dispositif de traitement (102) de données comprenant :
- un compteur monotone (106) configuré pour générer une première valeur de comptage ; et
- une mémoire (104) comprenant un circuit de contrôle d'accès (108) et contenant des premières données associées à une première phase de démarrage, le circuit de contrôle d'accès étant configuré pour :
- autoriser la lecture, sur la base de la première valeur de comptage, des premiers codes de démarrage, les premiers codes de démarrage comprenant une instruction d'incrémentation du compteur monotone vers une deuxième valeur de comptage supérieure à la première valeur de comptage (118) ; et
- ne pas autoriser la lecture des premières données sur la base de la deuxième valeur de comptage.

## Patentansprüche

1. Verfahren zum Booten einer Verarbeitungsvorrichtung (102), wobei das Verfahren Folgendes aufweist:
- Erzeugen eines ersten Zählwerts durch einen monotonen Zähler (106) während einer ersten Bootphase;
- Übertragen des ersten Zählwerts durch den monotonen Zähler an eine Zugriffssteuerschaltung (108) eines Speichers (104);
- Lesen, basierend auf dem ersten Zählwert, von ersten Datenwerten (118), die der ersten Bootphase zugeordnet und im Speicher gespeichert sind, wobei die ersten Datenwerte erste Bootcodes aufweisen;
- Ausführen der ersten Bootcodes, wobei die ersten Bootcodes einen Befehl zum Inkrementieren des monotonen Zählers auf einen zweiten Zählwert aufweisen, der größer ist als der erste Zählwert;
- Erzeugen des zweiten Zählwerts durch den Zähler während einer zweiten Bootphase, wobei die Zugriffssteuerungsschaltung (108) des Speichers (104) so konfiguriert ist, dass das Lesen der ersten Datenwerte auf der Basis des zweiten Zählwerts nicht autorisiert ist.

2. Verfahren nach Anspruch 1, wobei der Speicher (104) ein flüchtiger Speicher ist.

3. Verfahren nach Anspruch 1, wobei der Speicher (104) ein nichtflüchtiger Speicher ist.

4. Verfahren nach einem der Ansprüche 1 bis 3, wobei die Zugriffssteuerschaltung (108) des Speichers (104) so konfiguriert ist, dass das Lesen der ersten Datenwerte (118) auf der Basis eines Zählwerts, der größer als der erste Zählwert ist, nicht autorisiert ist.

5. Verfahren nach einem der Ansprüche 1 bis 4, das ferner das Lesen von zweiten Datenwerten (120), die in dem Speicher (104) gespeichert und der zweiten Startphase zugeordnet sind, auf der Grundlage des ersten Zählwerts aufweist.

6. Verfahren nach einem der Ansprüche 1 bis 5, das ferner Folgendes aufweist:
- Übertragen des zweiten Zählwerts durch den monotonen Zähler (106) an den Speicher (104); und
- Lesen von zweiten und/oder dritten Datenwerten (120, 122), die in dem Speicher (104) gespeichert sind, basierend auf dem zweiten Zählwert.

7. Verfahren nach einem der Ansprüche 1 bis 6, wobei der erste Zählwert einem Initialisierungswert des monotonen Zählers (106) während eines ersten Bootens der Verarbeitungsvorrichtung (102) entspricht, wobei das Verfahren ferner ein zweites Booten der Verarbeitungsvorrichtung aufweist, während dem der monotone Zähler auf den zweiten Zählwert initialisiert wird.

8. Verfahren nach Anspruch 7, das einen weiteres Booten der Verarbeitungsvorrichtung (102) nach dem ersten und zweiten Booten aufweist, während dem der monotone Zähler (106) erneut auf den ersten Zählwert initialisiert wird, wenn eine Bedingung hinsichtlich des Zustands der Vorrichtung erfüllt ist.

9. Verfahren nach Anspruch 8, wobei die Bedingung für den Zustand der Verarbeitungsvorrichtung dem Programmierzustand eines oder mehrerer Bits entspricht, die nichtflüchtig in einem Bereich des Speichers (104) oder eines anderen Speichers gespeichert sind.

10. Verfahren nach einem der Ansprüche 1 bis 9, das vor dem Erzeugen des zweiten Zählwerts ferner das Lesen eines oder mehrerer erster Verschlüsselungsschlüssel (200) aufweist, die im Speicher (104) gespeichert sind, und zwar auf der Basis des ersten Zählwerts, wobei die Zugriffssteuerungsschaltung (108) des Speichers so konfiguriert ist, dass das Lesen der ersten Verschlüsselungsschlüssel auf der Basis eines Zählwerts, der größer als der erste Zählwert ist, nicht autorisiert ist.

11. Verfahren nach Anspruch 10, das nach dem Erzeugen des zweiten Zählwerts das Lesen eines oder mehrerer zweiter Verschlüsselungsschlüssel (202), die im Speicher gespeichert sind, auf der Basis des zweiten Zählwerts aufweist.

12. Datenverarbeitungsvorrichtung (102), die Folgendes aufweist:
- einen monotonen Zähler (106), der konfiguriert ist zum Erzeugen eines ersten Zählwerts; und
- einen Speicher (104), der eine Zugriffssteuerschaltung (108) aufweist und erste Datenwerte enthält, die einer ersten Bootphase zugeordnet sind, wobei die Zugriffssteuerschaltung konfiguriert ist zum:
- Autorisieren des Lesens der ersten Bootcodes auf der Basis des ersten Zählwerts, wobei die ersten Bootcodes eine Anweisung zum Inkrementieren des monotonen Zählers auf einen zweiten Zählwert aufweisen, der größer ist als der erste Zählwert (118); und
- Nicht-Autorisieren des Lesens der ersten Datenwerte auf der Basis des zweiten Zählwerts.

## Claims

1. A method for booting a processing device (102), the method comprising:
- the generation, by a monotonic counter (106) and during a first boot phase, of a first count value;
- the transmission, by the monotonic counter, of the first count value to an access control circuit (108) of a memory (104);
- the reading, based on the first count value, of first data values (118) associated to the first boot phase and stored in the memory, the first data values comprising first boot codes;
- the execution of the first boot codes, the first boot codes comprising an instruction to increment the monotonic counter to a second count value greater than the first count value;
- the generation, by the said counter and during a second boot phase, of the second count value, the access control circuit (108) of the memory (104) being configured so that the reading of the first data values is not authorized based on the second count value.

2. The method according to claim 1, wherein the memory (104) is a volatile memory.

3. The method according to claim 1, wherein the memory (104) is a non-volatile memory.

4. The method according to any one of claims 1 to 3, wherein the access control circuit (108) of the memory (104) is configured such that reading of the first data values (118) is not authorized based on a count value greater than the first count value.

5. The method according to any one of claims 1 to 4, further comprising the reading, based on the first count value, of second data values (120) stored in the memory (104) and associated with the second boot phase.

6. The method according to any one of claims 1 to 5, further comprising:
- the transmission, by the monotonic counter (106), of the second count value to the memory (104); and
- the reading of second and/or third data values (120, 122) stored in the memory (104) based on the second count value.

7. The method according to any one of claims 1 to 6, wherein the first count value corresponds to an initialization value of the monotonic counter (106) during a first boot of the processing device (102), the method further comprising a second boot of the processing device during which the monotonic counter is initialized to the second count value.

8. The method according to claim 7, comprising a further boot of the processing device (102), after the first and second boots, during which the monotonic counter (106) is initialized again to the first count value if a condition on the state of the device is satisfied.

9. The method according to claim 8, wherein the condition on the state of the processing device corresponds to the programming state of one or more bits stored in a non-volatile manner in an area of the memory (104) or of another memory.

10. The method according to any one of claims 1 to 9, further comprising, before the generation of the second count value, the reading, based on the first count value, of one or more first encryption keys (200) stored in the memory (104), the access control circuit (108) of the memory being configured such that reading of the first encryption keys is not authorized based on a count value greater than the first count value.

11. The method according to claim 10, further comprising, after the generation of the second count value, the reading based on the second count value of one or more second encryption keys (202) stored in the memory.

12. A data processing device (102) comprising:
- a monotonic counter (106) configured to generate a first count value; and
- a memory (104) comprising a control access circuit (108) and containing first data values associated to a first boot phase, the control access circuit being configured to:
- authorize the reading, based on the first count value, of the first boot codes, the first boot codes comprising an instruction to increment the monotonic counter to a second count value greater then the first count value (118); and
- not authorize the reading of the first data values based on the second count value.
